# EUROPÄISCHE PATENTSCHRIFT

(11) **EP 1 194 265 B1**
(45) Veröffentlichungstag und Bekanntmachung des Hinweises auf die Patenterteilung: **04.06.2003**
(21) Anmeldenummer: 00949222.4
(22) Anmeldetag: 29.06.2000
(51) Int. Cl.: B23Q 1/70, F16C 21/00

(54) **LAGERANORDNUNG FÜR WERKZEUGMASCHINENSPINDELN**
BEARING ARRANGEMENT FOR MACHINE TOOL SPINDLES
DISPOSITION DE PALIERS DESTINES A DES BROCHES DE MACHINES-OUTILS

(30) Priorität: 08.07.1999 DE 19931936
(43) Veröffentlichungstag der Anmeldung: 10.04.2002
(73) Patentinhaber: DS Technologie Werkzeugmaschinenbau GmbH, 41236 Mönchengladbach (DE)
(72) Erfinder: STÜDEMANN, Bernd, D-41068 Mönchengladbach (DE); HENNES, Norbert, D-53332 Bornheim (DE)
(74) Vertreter: Rehders, Jochen
(86) Internationale Anmeldenummer: EP0006044
(87) Internationale Veröffentlichungsnummer: WO01003882

(56) Entgegenhaltungen:
- EP-A- 0 756 095
- DE-A- 2 630 740
- DE-A- 3 902 907
- DE-A- 4 324 140
- GB-A- 1 331 542
- US-A- 3 642 331
- US-A- 3 708 215
- US-A- 3 854 781
- US-A- 4 092 048
- US-A- 5 193 953
- BUSHUEV V V ET AL: "SPINDLE ASSEMBLY WITH COMBINATION BEARING SUPPORTS" RUSSIAN ENGINEERING RESEARCH,US,ALLERTON PRESS, NEW YORK, Bd. 13, Nr. 2, 1993, Seiten 85-93, XP000458956 ISSN: 1068-798X

## Beschreibung

Die Erfindung betrifft eine Lageranordnung für Werkzeugmaschinenspindeln.

Werkzeugmaschinenspindeln werden entweder in Wälzlagern oder in Gleitlagern, insbesondere hydrostatischen Lagern gelagert.

Wälzlager weisen den Vorteil einer geringen Reibung und damit Erwärmung auch bei hohen Drehzahlen auf, jedoch verursachen hohe örtliche Belastungen zwischen Wälzkörper und Wälzring harten Lauf, wodurch Schwingungen leichter übertragen oder durch die Lager selbst erzeugt werden. Auch die Rundlaufgenauigkeit von Wälzlagern ist wegen der aus innenring, Wälzkörper und Außenring bestehenden Wälzlagerung nur mit größtem Aufwand auf die bei modernen Werkzeugmaschinen geforderten niedrigen Werte zu bringen. Um einen Teil dieser Nachteile zu vermeiden, ist es aus der DE 26 30740 A bekannt, die Außenringe der Wälzlager in hydrostatischen Lagern anzuordnen. Dies ist mit hohem Bauaufwand verbunden

Demgegenüber lassen sich mit einer hydrostatischen Lagerung allein sehr hohe Rundlaufgenauigkeiten erreichen, da nur wenige Teile, nämlich die Welle, die Lagerbuchse und die Gehäusebohrungen anzufertigen sind. Durch Läppen der Bohrungen mit einem Läppdorn lassen sich genaue Flucht, genaue Durchmesser und höchste Oberflächengüte erreichen. Durch den Schmierfilm sind schwingungsdämpfende Laufeigenschaften zu erreichen, so daß hydrostatische Lager auch für Feinschlichtarbeiten einsetzbar sind. Des weiteren sind hydrostatische Lager verschleißfrei. Eine derartige hydrostatische Vollagerung ist in der DE 43 24 140 A beschrieben. Da indessen für eine einwandfreie hydrostatische Lagerung einer Werkzeugmaschinenspindel normalerweise zwei Radial- und zwei Axial-Hydrostatiklager erforderlich sind, ist eine hohe Pumpenleistung erforderlich, um den erforderlichen hydrostatischen Druck im Lager aufzubauen und einen ausreichenden Öldurchsatz ohne übermäßige Erwärmung zu erreichen. Des weiteren sind Kühlaggregate erforderlich, um das umlaufende Schmieröl auf einer gleichmäßigen, zulässigen Temperatur zu halten.

DE 26 30 740 A beschreibt den nächstkommenden Stand der Technik: eine Spindellageranordnung bestehend aus hydrostatischen Lagern, die durch Radial-Axial-Wälzlagern umschlossen sind, wobei über eingebaute Drosseln, die hydrostatischen Lager mit variablem Öldruck beaufschlagt werden. Damit kann das Laufverhalten der Lagerung über den Öldruck optimiert werden. Ein Betrieb dieser Spindel ohne Druckölversorgung ist nicht möglich.

Der Erfindung liegt das Problem zugrunde, eine Lageranordnung zu schaffen, die eine hohe Rundlaufgenauigkeit und hohe Dämpfung bei hoher Zerspanungsleistung und hohe Drehzahlen zuläßt, ohne die Nachteile der bekannten Lageranordnungen aufzuweisen.

Ausgehend von dieser Problemstellung wird eine Lageranordnung für Werkzeugmaschinenspindeln gemäss dem Anspruch 1 vorgeschlagen. Durch das hydrostatische Radiallager ist eine hohe Rundlaufgenauigkeit, eine extrem steife Lagerung, eine hohe Dämpfung und eine hohe Sicherheit gegen Beschädigungen aufgrund von Radialstößen gegeben, die beispielsweise beim unbeabsichtigten Anfahren eines von der Werkzeugmaschinenspindel getragenen Werkzeugs gegen ein Werkstück eintreten können.

Die Erfindung geht von der Überlegung aus, daß die bekannten Eigenschaften einer hydrostatischen Lagerung im wesentlichen in Radialrichtung wünschenswert sind, während in Axialrichtung die Führung durch Radial-Axial-Wälzlager ausreichend ist. Des weiteren wirken sich die vorteilhaften Eigenschaften einer hydrostatischen Lagerung im wesentlichen im Bereich des werkzeugseitigen Endes der Spindel aus, so daß auch nur in diesem Bereich ein hydrostatisches Radiallager angeordnet sein muß.

Wenn parallel und benachbart zum hydrostatischen Radiallager wenigstens ein Radial-Axial-Wälzlager angeordnet ist, während am der Werkzeugaufhahme der Spindel abgekehrten Ende der Spindel weitere Radial-Wälzlager angeordnet sind, lassen sich hohe Drehzahlen erreichen, ohne daß die Pumpen- und Kühlleistungen übermäßig ansteigen, da gegenüber einer hydrostatischen Vollagerung mit zwei Radial- und zwei Axiallagern nur ein Viertel der Pumpen- und Kühlleistung erforderlich ist. Demgegenüber ist die erforderliche Ölversorgung der Wälzlager vemachlässigbar, da diese nur mittels eines mit geringen Mengen arbeitenden Ölnebels geschmiert und gekühlt werden.

Vorzugsweise können zwei parallele Radialschulterkugellager für Axialbelastungen in beiden Richtungen benachbart zum hydrostatischen Radiallager auf der der Werkzeugaufnahme der Spindel abgekehrten Seite des hydrostatischen Radiallagers angeordnet sein, wobei diese Wälzlager gegenüber den üblichen Wälzlagern eine erhebliche Verbesserung der Steifigkeit in axialer Richtung bewirken, da sie sich mit einem Druckwinkel von 25 ° anstelle der üblichen 15 ° ausführen lassen.

Wenn die Werkzeugmaschinenspindel mit unterschiedlichen Drehzahlen antreibbar ist, beispielsweise einer niedrigen Drehzahl für die Schwerzerspanung mit großen, schweren Fräsköpfen, für die eine hohe Dämpfung wichtig ist, einer mittleren Drehzahl für die Schlichtbearbeitung, ebenfalls mittels großer, schwerer Fräsköpfe, für die eine hohe Rundlaufgenauigkeit erforderlich ist, und einer hohen Drehzahl zum Herstellen von Bohrungen mittels Bohrern, die einen relativ kleinen Durchmesser aufweisen oder für einfache Fräsarbeiten mittels Kugelkopffräsern kleinen Durchmessers, ist die Lageranordnung so gestaltet daß das hydrostatische Radiallager nur im unteren und ggf. mittleren Drehzahlbereich, nicht aber im hohen Drehzahlbereich wirksam ist. Für den hohen Drehzahlbereich wird dann zwar auf die Vorteile der hydrostatischen Lagerung, wie hohe Dämpfung, hohe Rundlaufgenauigkeit und extrem steife Lagerung verzichtet, jedoch sind diese Eigenschaften beim Herstellen von Bohrungen bis zu 15 mm Durchmesser und beim Fräsen mittels Kugelkopffräsern kleinen Durchmessers nicht zwingend erforderlich.

Die hydrostatische Lagerung läßt sich auf einfache Weise durch Unterbrechung der Druckölzufuhr unwirksam machen. Dies läßt sich durch eine automatische Schaltvorrichtung erreichen, die die Druckölzufuhr zum hydrostatischen Radiallager oberhalb einer vorgebbaren Drehzahl unterbricht, wobei vorzugsweise gleichzeitig eine Druckluftbeaufschlagung des hydrostatischen Radiallagers erfolgt, um das im hydrostatischen Radiallager vorhandene Öl auszublasen.

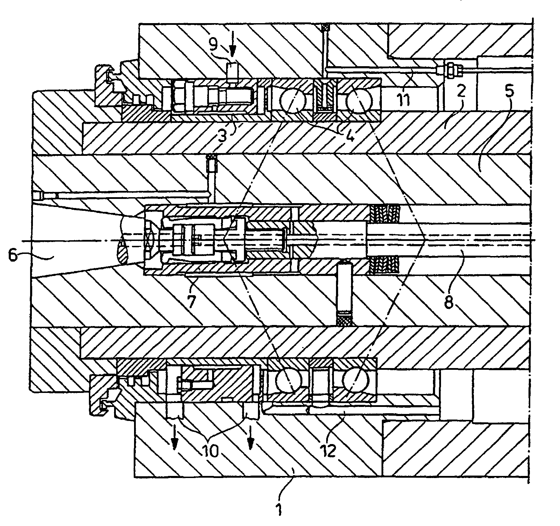

Die Erfindung wird nachstehend anhand eines in der Zeichnung dargestellten Ausführungsbeispiels des näheren erläutert.

Von einer Werkzeugmaschine ist nur der werkzeugseitige Bereich einer in einem Balken 1, der in einem nicht dargestellten Spindelkasten axial verschiebbar ist, drehbar gelagerten Fräshülse 2 mit einer darin axial verschiebbaren, jedoch nicht drehbaren Spindel 5 dargestellt. Die Fräshülse 2 und die Spindel 5 ergeben zusammen eine Werkzeugmaschinenhauptspindel 2, 5.

Die Fräshülse 2 ist im Balken 1 mittels einer Hydrostatiklagerung 3 und benachbart dazu mittels eines Radial-Schulterkugellagerpaares 4 gelagert.

Die Spindel 5 weist an ihrem Ende eine Steilkegelaufnahme 6 auf, in die sich ein entsprechender Steilkegel eines Fräskopfes oder eines Bohrers einführen und mittels einer automatischen Werkzeugspannvorrichtung 7 festhalten läßt. Diese automatische Werkzeugspannvorrichtung 7 wird mittels einer koaxialen Zugstange 8 in bekannter Weise zum Halten bzw. Ausstoßen eines Werkzeugs betätigt. Für die Schwerzerspanung mit niedriger Drehzahl von etwa 300 min⁻¹ wird ein schwerer, großer Fräskopf in der dargestellten Stellung der Spindel 5 mit Bezug auf die Fräshülse 2 an der hieraus gebildeten Werkzeugmaschinenhauptspindel 2, 5 befestigt, wobei die Drehmomentübertragung auf den Fräskopf ausschließlich über eine formschlüssige Kupplung mit der Fräshülse 2 erfolgt. Der erforderliche Vorschub wird durch axiales Verschieben des Balkens 1 im nicht dargestellten Spindelkasten bewirkt. Die Schlichtbearbeitung mit hoher Rundlaufgenauigkeit kann mit einer Drehzahl von etwa 1200 min⁻¹ durchgeführt werden.

Für leichtere Bohr- und Fräsarbeiten mittels Werkzeugen kleinen Durchmessers mit einer Drehzahl von etwa 3200 min⁻¹ läßt sich die Spindel 5 axial verschieben, die einen erheblich kleineren Durchmesser als der Balken 1 aufweist und daher in erheblich kleinere Öffnungen oder Bohrungen des zu bearbeitenden Werkstücks einführbar ist.

Der Hydrostatiklagerung 3 wird Drucköl über eine Druckölzuführ 9 zugeführt, und der Ölabfluß erfolgt über Ölabfuhren 10. Dieses abfließende Öl wird durch eine nicht dargestellte Kühleinrichtung geleitet und gelangt dann wieder zu einer nicht dargestellten Pumpe. Die Wirkungsweise von Hydrostatiklagerungen ist bekannt und braucht daher nicht im einzelnen erläutert zu werden.

Anzumerken ist bezüglich dieser Hydrostatiklagerung, daß diese mit einem hohen Summenspalt von etwa 100 µm arbeitet und der Hydrostatiklagerung 3 ein hoher Ölvolumenstrom über Stromregelventile zugeleitet wird. Dadurch wird der Öldruck sofort auf der Seite des Lagers erhöht, wo ein Impuls, beispielsweise durch Anfahren eines Werkzeugs gegen ein Werkstück, auftritt, der dadurch sofort abgefangen wird. Auf diese Weise werden die Wälzlager 4 gegen Stöße geschützt, und der Wartungs- bzw. Reparaturaufwand wird verringert.

Den Wälzlagern 4 wird Kühl- und Schmieröl über eine Ölzufuhr 11 zugeleitet, das als Ölnebel gegen die Kugel gesprüht wird. Dieses Öl wird über eine Ölabfuhr 12 im Balken 1 wieder zur Ölpumpe zurückgeführt.

## Patentansprüche

1. Lageranordnung für Werkzeugmaschinenspindeln (2, 5) aus einem hydrostatischen, im Bereich des werkzeugseitigen Endes der Spindel (2, 5) angeordneten Radiallager (3) und parallel und benachbart dazu wenigstens einem Radial-Axial-Wälzlager (4), sowie wenigstens einem Radial-Wälzlager im Bereich des der Werkzeugaufhahme abgekehrten Endes der Spindel (2, 5) und mit einer automatischen Schaltvorrichtung, die die Druckölzufuhr (9) zum hydrostatischen Radiallager (3), oberhalb einer vorgebbaren Drehzahl unterbricht.

2. Lageranordnung nach Anspruch 1, bei der auf der der Werkzeugaufnahme (6) der Spindel (2, 5) abgekehrten Seite des hydrostatischen Radiallagers (3) zwei parallele Radialschulterkugellager (4) für Axialbelastungen in beiden Richtungen benachbart zum hydrostatischen Radiallager (3) angeordnet sind.

3. Lageranordnung nach Anspruch 2, bei der die Radialschulterlager (4) einen Druckwinkel von 25 ° aufweisen.

4. Lageranordnung nach Anspruch 1, 2 oder 3, bei der die Spindel (2, 5) mit unterschiedlichen Drehzahlen antreibbar ist und das hydrostatische Radiallager (3) nur im unteren Drehzahlbereich wirksam ist.

5. Lageranordnung nach Anspruch 4, bei der eine Schaltvorrichtung das im hydrostatischen Radiallager (3) vorhandene Öl zum Unwirksamwerden des Radiallagers (3) mit Druckluft beaufschlagt, um das Öl auszublasen.

## Claims

1. A bearing arrangement for machine-tool spindles (2, 5) consisting of a hydrostatic radial bearing (3) located in the region of the tool end of the spindle (2, 5) and parallel and adjacent thereto at least one radial/axial roller bearing (4), and also at least one radial roller bearing in the region of the end of the spindle (2, 5) remote from the tool holder, and comprising an automatic switching device which interrupts the supply of pressure oil (9) to the hydrostatic radial bearing (3) above a presettable speed of rotation.

2. A bearing arrangement according to Claim 1, in which two parallel radial separable ball bearings (4) for axial loads in both directions are arranged adjacent to the hydrostatic radial bearing (3) on the side of the hydrostatic radial bearing (3) remote from the tool holder (6) of the spindle (2, 5).

3. A bearing arrangement according to Claim 2, in which the radial separable bearings (4) have a pressure angle of 25°.

4. A bearing arrangement according to Claim 1, 2 or 3, in which the spindle (2, 5) can be driven at different speeds and the hydrostatic radial bearing (3) is only effective in the lower speed range.

5. A bearing arrangement according to Claim 4, in which a switching device acts by means of compressed air upon the oil present in the hydrostatic radial bearing (3) to make the radial bearing (3) ineffective, in order to blow out the oil.

## Revendications

1. Disposition de paliers destinés à des broches de machines-outils (2, 5), constituée d'un palier radial hydrostatique (3) disposé dans la zone de l'extrémité de la broche (2, 5) côté outil et d'au moins un palier à roulement radial-axial (4) parallèle et adjacent à celui-ci ainsi que d'au moins un palier à roulement radial dans la zone de l'extrémité de la broche (2, 5) opposée au porte-outil, et comportant un dispositif automatique de commutation qui interrompt l'amenée d'huile sous pression (9) au palier radial hydrostatique (3) au-delà d'un nombre de tours pouvant être prédéterminé.

2. Disposition de paliers selon la revendication 1, dans laquelle, sur le du côté du palier radial hydrostatique (3) opposé au porte-outil (6) de la broche (2,5), deux roulements à billes à épaulement radial (4) parallèles pour contraintes axiales dans les deux sens sont disposés de façon adjacente au palier radial hydrostatique (3).

3. Disposition de paliers selon la revendication 2, dans laquelle les roulements à billes à épaulement radial (4) présentent un angle de pression de 25°.

4. Disposition de paliers selon la revendication 1, 2 ou 3, dans laquelle la broche (2, 5) peut être entraînée avec différents nombres de tours et le palier radial hydrostatique (3) n'agit que dans la plage de nombres de tours inférieure.

5. Disposition de paliers selon la revendication 4, dans laquelle un dispositif de commutation applique de l'air sous pression à l'huile présente dans le palier radial hydrostatique (3) pour inactiver le palier radial (3), afin de purger l'huile.
